# EUROPEAN PATENT APPLICATION

(11) **EP 0 953 412 A2**
(43) Date of publication of application: **03.11.1999**
(21) Application number: 99303028.7
(22) Date of filing: 20.04.1999
(51) Int. Cl.: B25D 3/00, B27G 17/06

(54) **Combined chisel and rasp tool**

(30) Priority: 28.04.1998 US 67461
(71) Applicant: Cooper Industries, Inc., Houston, Texas 77002 (US)
(72) Inventor: Cordes, Gene, Bremer, Alabama 35033 (US); Hall, Robert W., Cullman, Alabama 35058 (US)
(74) Representative: Jackson, Peter Arthur

(57) **Abstract**

A combined chisel and rasp tool for carpenters, woodworkers, locksmiths or others includes a bar member having a chisel cutting edge and rasp or file teeth formed on the surfaces of the bar member. The tool conveniently provides a single tool for cutting, removing, and shaping wood.

## Description

The present invention provides a single tool for cutting, removing, shaping and smoothing wood that advantageously combines the functions of other tools. Woodworkers, carpenters, locksmiths, and others often need to shape and smooth surfaces for various reasons, for example, cutting and shaping holes to fit handle sets or lock cylinders. A single tool that provides multiple functions allows the user to carry fewer tools, and is more efficient in use, by eliminating the need to change tools as often.

A tool according to the invention combines the functions of a wood chisel and a rasp or file in a single tool. The tool includes a bar member having the shape of a conventional chisel, and including a cutting edge formed at one end and a handle stem form at the opposite end. The bar member may be rectangular in profile, that is, a flat bar, or may be convex on one surface, what is known as a half-round shape. At least one of the major surfaces (the wider surfaces of the bar) is provided with cutting teeth for removing material. Cutting teeth herein refers to either rasp teeth or file teeth. Preferably, both the major surfaces are provided with cutting teeth.

The cutting edge is formed to include a bevel surface on one of the major surfaces, with a flat surface on the opposite surface. According to the invention, the cutting teeth are positioned on the major surfaces so as not to interfere with the chisel cutting edge. A first row of teeth is spaced from the chisel cutting edge to provide a border or margin surface.

The invention will become better understood with reference to the following detailed description in conjunction with the appended drawings, in which:
Fig. 1 is a top view of a combined chisel and rasp tool in accordance with the invention;
Fig. 2 is a top view of an alternative embodiment of the tool according to Fig. 1;
Fig. 3 is a side view of the tool shown in Fig. 1; and,
Fig. 4 is a bottom view of the tool shown in Fig. 1.

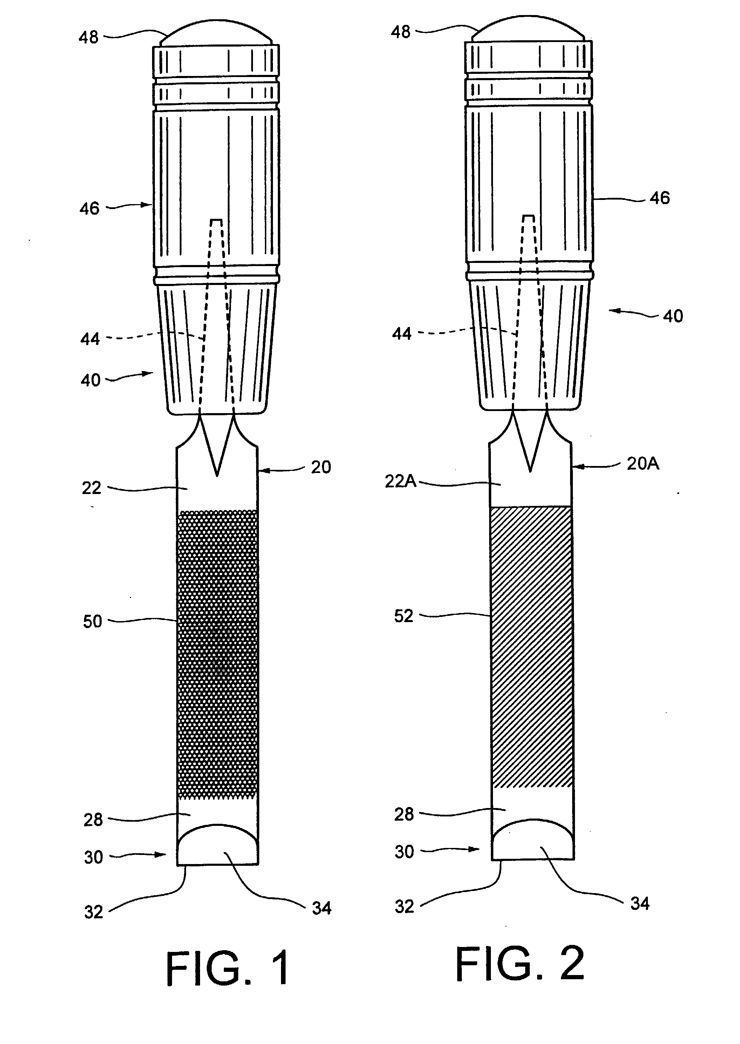

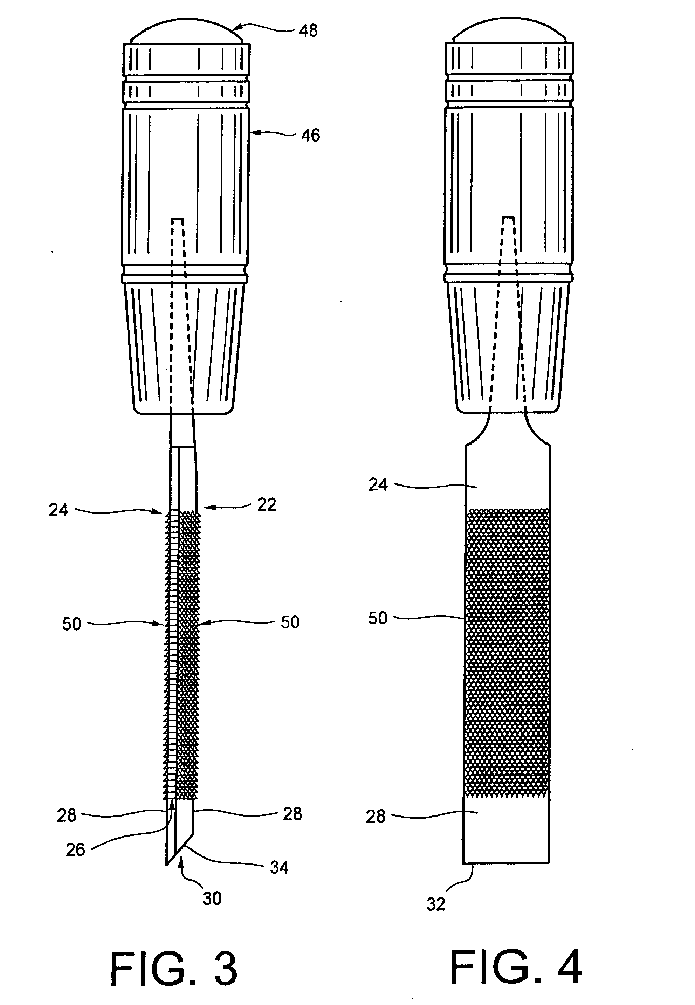

A combined chisel and rasp tool is illustrated in Fig. 1. The tool includes a bar member 20 having an upper surface 22 shown in the view in Fig. 1, and an opposite lower surface 24, shown in Fig. 4. The terms "upper" and "lower" are used for the purposes of this description, and are not to be construed as limiting. The bar member 20 is formed of a material having suitable hardness and strength. A presently preferred material is heat treated and tempered 6150 steel.

The bar member 20 is shaped to have a chisel cutting edge 30 at one longitudinal end and a handle portion 40 at the opposite longitudinal end. The cutting edge 30 is formed as for a chisel, having a sharpened tip 32 with a bevel 34 formed in the upper surface 22 and leading to the cutting edge 30. The handle portion 40 includes a stem 44 to connect the bar member 20 to a handle 46. The handle 46 provides a grip for the user of the tool, and includes a strike plate 48 longitudinally opposite the cutting edge 32.

The bar member 20 may be rectangular in profile, or may be shaped with the upper surface 22 having a convex curvature, a shaped known as half-round.

Shown in Fig. 1, the upper surface 22 includes a multiplicity of rasp teeth 50 arranged in a plurality of rows. According to an altemative embodiment illustrated in Fig. 2, the upper surface 22a may be provided with file teeth 52. The tool according to the invention thus provides a chisel cutting edge 32 and rasp 50 or file 52 teeth for cutting, removing, and shaping material in a single tool.

Fig. 3 and Fig. 4 illustrate, respectively, a side view and a bottom view of the tool of Fig. 1. The lower surface 24 is provided with rasp teeth 50 as is the upper surface 22. The lower surface 24 may alternatively be provided with file teeth as in the upper surface 22a shown in Fig. 2.

In addition, the edge surfaces 26 may be provided with rasp teeth 50 or file teeth 52, if desired.

As seen in the Figures, the rasp teeth 50 or file teeth 52 are positioned on the bar member 20 to be spaced from the cutting edge 30, providing a margin or border area 28 with a smooth surface. The cutting teeth 50, 52 thus are positioned so not to interfere with the chisel cutting edge 30.

The invention has been described in terms of preferred embodiments, principles, and examples, however, the invention is not limited strictly to what is described herein. Those skilled in the art will understand that substitutions and changes may be made without departing from the scope of the invention as defined in the following claims.

## Claims

1. A hand tool, comprising a bar member having longitudinally opposed handle and blade ends, the blade end having a transversely oriented cutting edge, the bar member also having an upper surface, a lower surface and edge surfaces, the upper and lower surfaces being greater in transverse width than the edge surfaces, and at least one of the upper and lower surfaces having a multiplicity of cutting teeth formed thereon, wherein the cutting teeth are one of rasp teeth and file teeth.

2. The hand tool as claimed in claim 1, wherein one of said upper and lower surfaces has file teeth and the other of said surfaces has rasp teeth.

3. The hand tool as claimed in claim 1, wherein the top surface is rounded in the transverse direction.

4. The hand tool as claimed in claim 1, wherein the cutting teeth are rasp teeth and are formed on both the upper surface and the lower surface.

5. The hand too as claimed in claim 1, wherein the teeth are file teeth and are formed on both the upper surface and the lower surface.

6. The hand tool as claimed in claim 1, wherein one of file and rasp teeth are formed on the edge surfaces.
